# EUROPEAN PATENT SPECIFICATION

(11) **EP 3 176 400 B1**
(45) Date of publication and mention of the grant of the patent: **10.07.2019**
(21) Application number: 16201528.3
(22) Date of filing: 30.11.2016
(51) Int. Cl.: F01P 5/04, F01P 7/04, F01P 7/08

(54) **FAN DRIVE WITH IMPROVED VARIABLE SLIPPAGE CLUTCH UNIT FOR AN INTERNAL COMBUSTION ENGINE**
VENTILATORANTRIEB MIT VERBESSERTER VARIABLER SCHLUPFKUPPLUNGSEINHEIT FÜR EINEN VERBRENNUNGSMOTOR
COMMANDE DE VENTILATEUR PRÉSENTANT UNE UNITÉ D'EMBRAYAGE AMÉLIORÉE À GLISSEMENT VARIABLE POUR UN MOTEUR À COMBUSTION INTERNE

(30) Priority: 01.12.2015 IT UB20156050
(43) Date of publication of application: 07.06.2017
(73) Proprietor: CNH Industrial Italia S.p.A., 10135 Torino (IT)
(72) Inventor: BENEVELLI, Alessandro, 42020 Albinea (IT); NATALI, Silvio, 41122 Modena (MO) (IT)
(74) Representative: CNH Industrial IP Department

(56) References cited:
- EP-A1- 0 826 892
- DE-A1- 19 821 096
- US-A- 3 444 748

## Description

The present invention relates to a fan drive for an internal combustion engine, in particular for an internal combustion engine provided in agricultural vehicles, such as harvesters, tractors and the like, or construction vehicles, such as loaders, excavators and the like.

### BACKGROUND OF THE INVENTION

A fan drive is normally provided in a cooling system of an internal combustion engine. In particular a fan is used to provide an air flow for cooling a diesel engine of a working vehicle, such as an agricultural vehicle or a construction vehicle.

The fan is designed to provide the appropriate cooling effect in the most severe working condition of the IC engine. The latter however seldom occurs so that power absorption of the fan is excessively high during other working conditions.

It is known to provide a variable slippage fluid clutch to couple in a torque transfer mode a driving shaft of the internal combustion engine to the fan in order to control the rotating speed of the fan with respect to the rotating speed of the driving shaft and thus decrease power absorption. For example, when the IC engine is started from a cold condition, e.g. when the vehicle is parked and the IC engine is substantially at the environment temperature, the clutch unit is controlled so that the fan has a low or null rotational speed. Without a significant cooling from the fan, the engine quickly reaches a predefined optimal working temperature, thus reducing low efficiency transients. In addition, power is saved when the fan is stopped or rotates at low speed. Reduction of the fan speed with respect to the driving shaft can also be operated during running of the vehicle according to known control strategies.

Efficiency of a fluid variable slippage clutch is in general satisfactory. However there are certain fan working conditions wherein the clutch shall transfer an intermediate level of torque, e.g. the fan is at a medium range speed, and at the same time the driving shaft speed is relatively high. In such a working condition a non negligible amount of power is wasted due to the combination of slippage an transferred torque.

DE-A1-19821096 discloses fan drive according to the preamble of claim 1.

It is therefore the scope of the present invention to further decrease power consumption of a fan driven by a fluid slippage clutch unit and, at the same time, to provide an effective cooling to the IC engine in all working conditions.

### SUMMARY OF THE INVENTION

The scope of the present invention is achieved with a fan drive for a working vehicle comprising a fluid slippage clutch and a fan in series to the fluid slippage clutch and a speed shift unit connected in series to the fan and the fluid slippage clutch and configured to discretely provide a first non-zero speed ratio and at least a second non-zero speed ratio, the speed shift unit comprising a clutch unit having a first and at least a second clutch configured to alternatively connect the first or the second non-zero speed ratios to the fan.

In particular a control unit of the fan drive is programmed to efficiently switch between a slippage fan speed control mode operated by the fluid slippage clutch and a modulating fan speed control mode operated by the speed shift unit.

Furthermore, a retrofit method is provided in order to upgrade an existing fan drive provided with an existing fluid slippage clutch connected in series to the fan.

### BRIEF DESCRIPTION OF THE DRAWINGS

For a better understanding of the present invention, the latter will further be disclosed with reference to the accompanying figures in which:
- figure 1a, 1b and 1c are respective schematic views in different working conditions of a fan drive according to the present invention;
- figure 2 is a plot of characteristic curves of power absorbed by the fan according to different control strategies;
- figure 3 is a flowchart of a preferred control strategy of the fan drive in figure 1; and

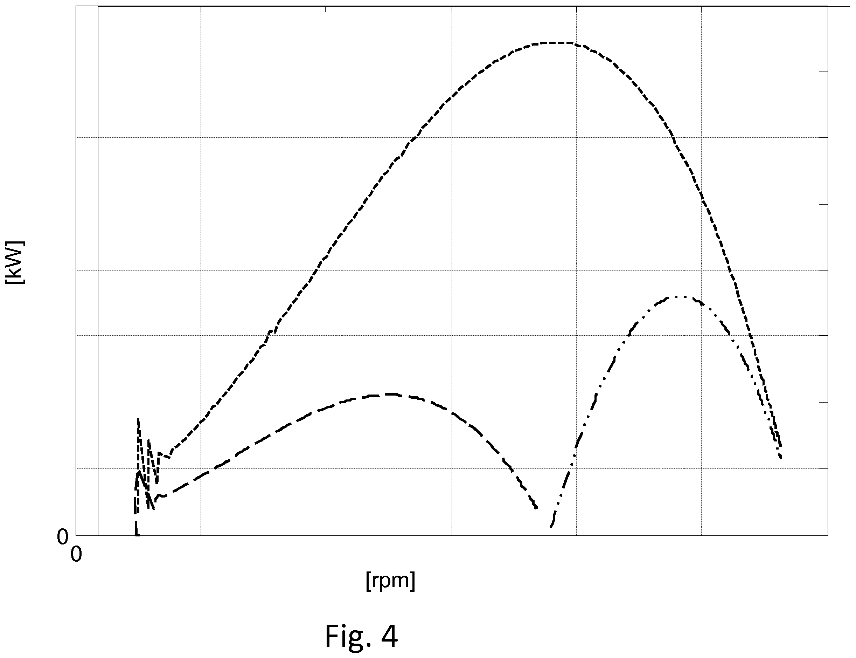

- figure 4 is a comparison of the power loss over the fan rotating speed according to prior art and after implementation of a control strategy according to figure 3.

### DETAILED DESCRIPTION OF THE DRAWINGS

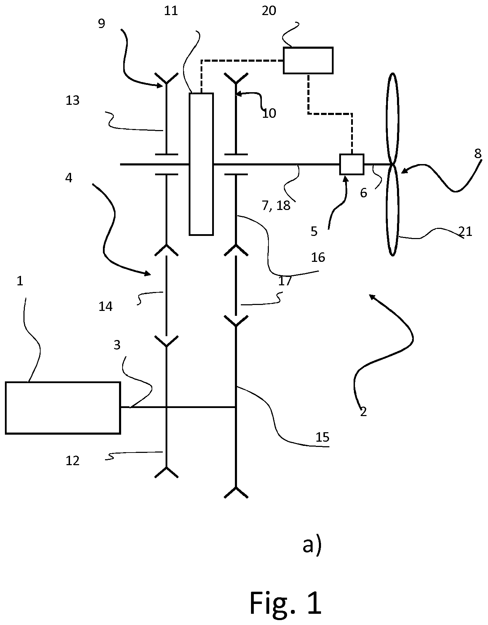

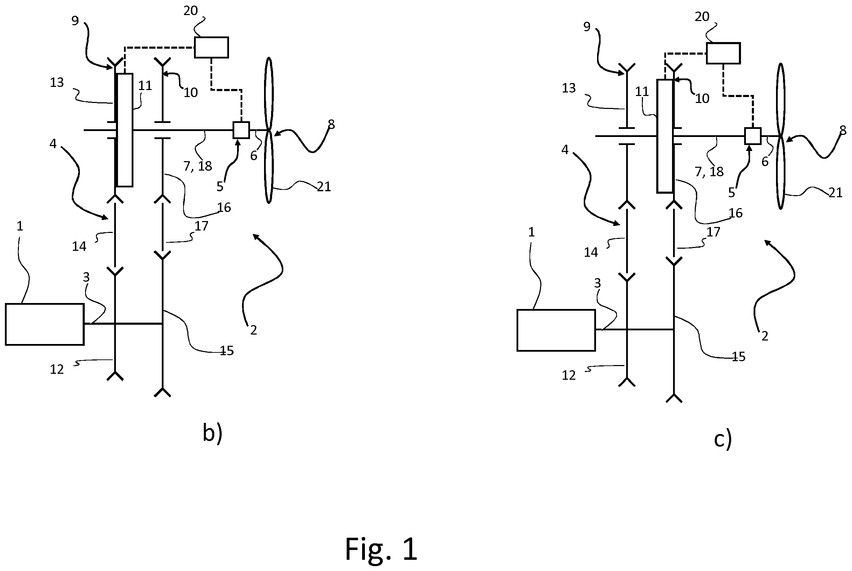

In figure 1, numeral 1 refers to an internal combustion engine for a working vehicle that is cooled by a fan drive 2 driven by a shaft 3 of IC engine 1. Shaft 3 is connected with a fixed speed ratio to a crankshaft of IC engine 1.

Fan drive 2 comprises, in series, a discrete speed shift unit 4 configured to define at least a first and a second non-zero speed ratio SR1, SR2 and possibly a neutral or zero ratio SR0, a fluid or wet slippage clutch 5 controllable so that speed of an output shaft or member 6 lags or pairs the speed of an input shaft or member 7, and a fan 8 driven by speed shift unit 4 and fluid slippage clutch 5.

Discrete speed shift unit 4 comprises, according to a preferred embodiment of the invention, a first endless flexible drive 9 defining the first speed ratio, a second endless flexible drive 10 set in parallel to first endless flexible drive 9 with respect to shaft 3 and defining the second speed ratio, and a clutch unit 11 to select whether fan 8 is driven either by the first endless flexible drive 9 or by the second endless flexible drive 10. In particular, alternative connection of either endless flexible drive 9 or endless flexible drive 10 is operated by clutch unit 11 that preferably comprises a first and a second on-off clutch each of which is placed in order to selectively connect endless flexible drive 9 or endless flexible drive 10 to fan 8. Each on-off clutch initially slips during transients when connecting either endless flexible drive 9 or endless flexible drive 10 to fan 8 (figure 1 shows only a functional sketch). Preferably, slippage is dry slippage obtained by one or more friction disks. Each clutch can be hydraulic, electro-magnetic or purely mechanical.

According to figure 1, first endless flexible drive 9 comprises a driving pulley 12 connected in a torque transmitting manner to shaft 3, a driven pulley 13 and a belt 14 to connect in a torque transmitting manner pulley 12 to pulley 13. Second endless flexible drive 10 comprises a driving pulley 15 connected in a torque transmitting manner to shaft 3 in parallel to pulley 12, a driven pulley 16 and a belt 17 to connect in a torque transmitting manner pulley 15 to pulley 16.

Shift unit 4 also comprises a driven shaft 18 to which pulleys 13 and 16 are selectively connected in a torque transmitting manner by clutch unit 11 in order to control the speed of fan 8. In particular, pulleys 13, 16 are free to rotate with respect to driven shaft 18; and clutch unit 11, in a discrete and selective manner, connects either pulley 13 or pulley 16 to driven shaft 18 whilst the other one freely rotates with respect to shaft 18 (figure 1b). When discrete speed shift unit 4 is in the neutral ratio SR0 and shaft 3 is rotating, both pulleys 13, 16 freely rotate with respect to shaft 18 that, in such a condition, is disengaged from driving shaft 3 so that fan 8 is stopped or at a minimum speed.

According to figure 1, pulleys 12 and 15 have different diameters and pulleys 13, 16 have the same diameter in order to define first and second speed ratio SR1, SR2. However other suitable combinations of diameters are possible in order to have first speed ratio SR1 different from second speed ratio SR2. One of the first and second speed ratio can be unitary and the other one is either below or above 1 depending on the IC engine models.

It is also possible to provide drives 9, 10 with chain and sprockets (not shown) having the same functions as pulleys 12, 13, 15, 16 and belts 14, 17.

Furthermore it is also possible that discrete shift unit 4 defines first and second speed ratio and, possibly, neutral ratio by means of gears or a combination of gear drives and endless flexible drives.

Discrete shift unit 4 has a high torque transfer efficiency, i.e. ratio between power available on shaft 18 and power applied to shaft 3. Torque transfer efficiency does not take into consideration power absorbed for control and actuation of the components, i.e. power absorbed to switch clutch unit 11. Depending on design requirements, minimum torque transfer efficiency of shift unit 4 can be either 90% or higher. For example, efficiency of belt drives 9, 10 can be 95% or higher. Furthermore efficiency of shift unit 4 remains constant over rotation speed range of fan 8.

According to figure 1, discrete shift unit 4 is upstream to fluid slippage clutch 5 along the torque flow from shaft 3 to fan 8.

Fluid slippage clutch 5 can be for example a mechanically controlled fluid friction clutch having input shaft 7 and output shaft 6 connected to respective armatures (not shown) inside a working chamber filled with a viscous fluid, for example a silicone-based oil. In particular, in a fluid friction clutch, rotational movement is transmitted to the viscous fluid from the armature connected to input shaft 7; and to the armature connected to output shaft 6 from the viscous fluid, for example by shear forces within the fluid. Mechanical control can be implemented via a hydraulic control valve to set the slip of the fluid friction clutch based on metering the amount of viscous fluid within the working chamber. For example, when the valve is open and input shaft 6 is running, viscous fluid tends to leak out the working chamber so that armatures can more easily slip one with respect to the other and a low torque is thus transmitted. When the valve is closed after a large amount of viscous fluid is injected in the working chamber, the fluid is trapped and transmitted torque increases, thus lowering slippage.

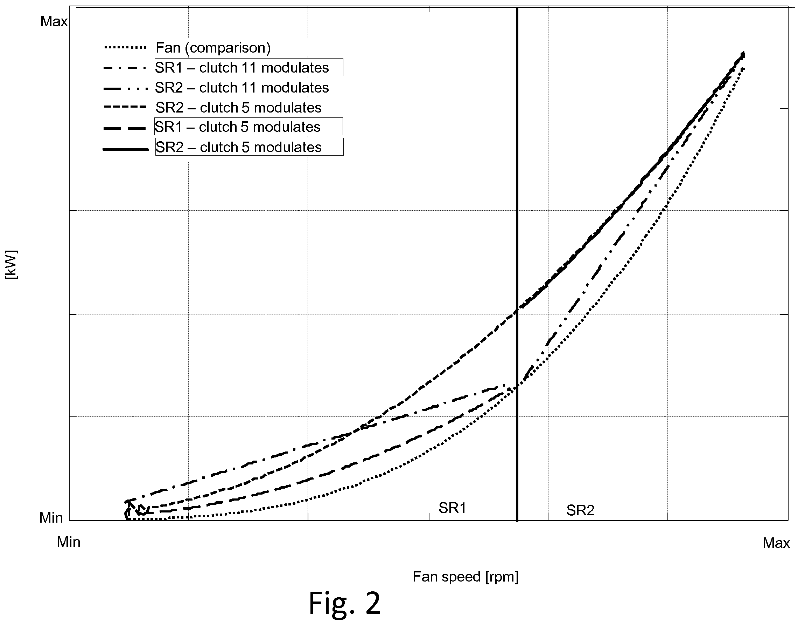

In view of the above, fluid slippage clutch 5 has an efficiency that is continuously variable depending on the working condition of fan 8. In particular, throughout the speed range of fan 8, torque transfer efficiency of fluid slippage clutch 5 ranges from a maximum to a minimum of approximately 65% excluding power absorption for the actuation of the valve. The maximum efficiency is reached when either transmitted torque is low and slippage is maximum, i.e. the fan is stopped or at its minimum speed, or transmitted torque is maximum and slippage is low, i.e. the fan is at its maximum speed. Minimum efficiency is experienced where, approximately at mid fan speed range, both slippage and transmitted torque are at an intermediate level. This is also qualitatively shown in figure 2 where, as it will be explained in greater detail below, dashed curve and dotted curve are proximal at both maximum and minimum fan speed and, from such endpoints, progressively depart one from the other to reach a maximum difference in an intermediate speed range.

Fluid slippage clutch 5 is controllable by a discrete control such that valve pulsates between an open an a closed position. This can be implemented by an ON/OFF valve controlled by a PWM controller. Other controls are applicable, for example a proportional control of a servovalve.

According to the embodiment of figure 1, input shaft 7 of fluid slippage clutch 5 is rigidly connected to, and preferably a single body with, driven shaft 18. Fan 8 is connected in order to rotate at the same speed as that of output shaft 6.

Fluid slippage clutch 5 and clutch unit 11 are controlled by an electronic control unit 20 that may be dedicated to the control of fan drive 2 or be embedded in an electronic control system of IC engine 1.

According to a preferred embodiment, fan 8 is a fixed blade fan, i.e. blades 21 have a fixed orientation when fan 8 is stopped. As an alternative, fan 8 may comprise rotatable blades configured to change the pitch of fan 8. Furthermore, fluid slippage clutch 5 is surrounded by blades 21 in order to reduce axial dimension. To this regard, output shaft 6 and input shaft 7 can be substituted by mechanical members having different shapes. For example, output member 6 can be shaped as a hub of fan 8 and input member 7 can be a flange for connection with shift unit 4.

Figure 2 compares different fan power consumptions of fan drive 2 over the fan working speed compared to the power consumption (dotted) of a theoretical condition where fan 8 is rigidly connected to shaft 3 and IC engine 1 ramps up. In particular:
- Dashed curve shows power consumption of the combination of fan 8 and fluid slippage clutch 5 where engine 1 is kept at a high constant speed, shift unit 4 is switched at SR2 and slippage clutch 5 is controlled to ramp up the speed of fan 8;
- Large dashed curve shows power consumption of the combination of fan 8 and slippage clutch 5 when shift unit 4 is switched at SR1, SR2 being greater than SR1, and speed of IC engine 1 is constant as above. Ramping of the fan is obtained by controlling slippage clutch 5;
- Continuous curve (partially superimposed to dashed curve) shows power consumption of the combination of fan 8, slippage clutch 5 when shift unit 4 is switched at SR2 and speed of IC engine 1 is constant as above. Ramping of the fan is obtained by controlling slippage clutch 5;
- Dash-dot line shows power consumption when slippage clutch 5 is fully engaged, i.e. minimum or null slippage, and clutch unit 11 is controlled to selectively switch, e.g. pulse-width modulate, between SR0 and SR1 in order to obtain a predefined characteristic curve. Modulation between SR0 and SR1 can be controlled such that the line is rectilinear;
- Dash-dot-dot line shows power consumption when slippage clutch 5 is fully engaged, i.e. minimum or null slippage, and clutch unit 11 is controlled, e.g. modulated, between SR1 and SR2 as discussed above for SR0 and SR1.

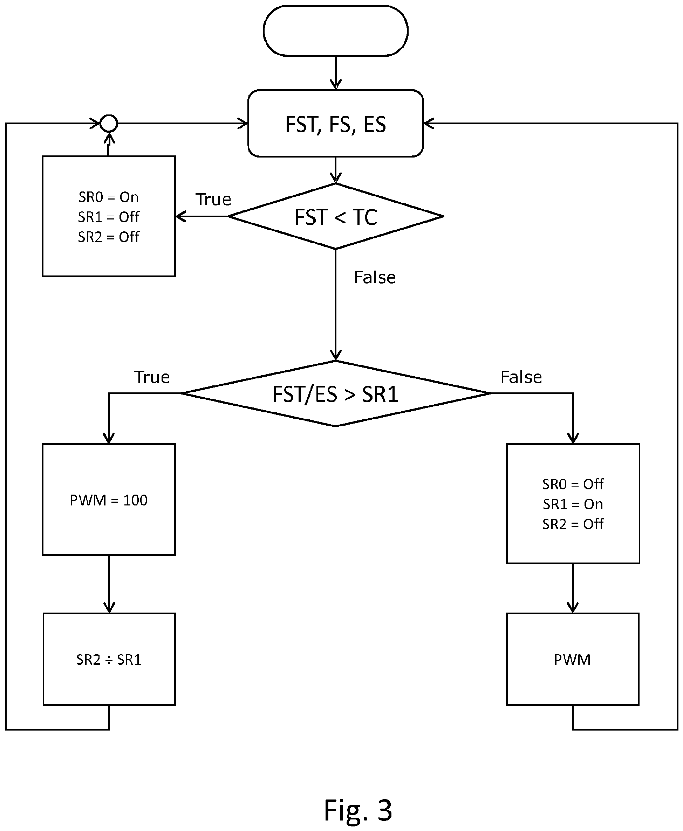

According to a preferred control method of fan drive 2 (figure 3), control unit 20 determines a target speed FST of fan 8 and checks whether the ratio of FST and the speed of shaft 3 ES is higher than SR1.

In the affirmative, fluid slippage unit 5 is set to a maximum torque transfer mode, i.e. full engagement, and control unit 20 switches clutch unit 11, i.e. between SR1 and SR2, in order to follow the predetermined characteristic curve that can be rectilinear, e.g. dash-dot-dot of figure 2. When fluid slippage clutch 5 is PWM controlled, full engagement of clutch 5 is realized by setting the maximum amount of fluid in the working chamber and by fully closing the control valve for the 100% of the working cycle (PWM=100 in left branch of figure 3).

In the negative, SR1 is set and the fan speed is controlled through fluid slippage clutch 5, e.g. according to modulation with a non 100% working cycle of the control valve, to follow FST. This corresponds to large dashed line of figure 2.

As shown in figure 3 the fan speed FS is controlled in closed loop.

According to an option, also included in figure 3, control unit 20 checks whether FST is lower than a predefined speed threshold, e.g. threshold TC for cold starting of IC engine 1. Control unit 20 checks for cold starting before checking whether the ratio of FST and the speed of shaft 3 ES is higher than SR1. In case FST is lower than TC, control unit 20 ensures that shift unit 4 is in the neutral ratio SR0, i.e. driven shaft 18 is disconnected from shaft 3. In such a condition, fan 8 is stopped or rotates at its minimum speed. In the negative, ratio FST/ES is checked over SR1 and the above paragraphs apply.

According to the method of the preceding paragraphs power consumption is optimized both in a lower fan speed range and a higher fan speed range. This is confirmed by the large dashed line and the dash-dot-dot line that are close to dotted line, which represents a condition where efficiency of transmission between shaft 3 and fan 8 is unitary. This is because the dotted line refers to a layout where fan 8 is rigidly connected to shaft 3. In particular, along large dashed curve, dissipation is reduced because slippage occurs at a lower speed. Along dash-dot-dot line, dissipation is reduced because the modulation between SR1 and SR2 is operated at higher efficiency, i.e. excluding fluid slippage.

It is however possible to control fan drive 2 to introduce the benefit discussed above either at lower or at higher speed range only.

Advantages of fan drive 2 according to the present invention are as follows.

Speed shift unit 4 introduces a discrete double speed range within fan drive 2 that is simple to implement and at the same time advantageous, depending on the control strategy, to reduce power losses due to slippage of fluid slippage clutch 5. In particular, due to SR1 and SR2 it is possible to design a fan drive having characteristic curves that either are below, e.g. large dashed curve, the characteristic curve relative to a slippage only control, i.e. dashed curve of figure 2; or intercept such dashed curve and extend in a region of increased efficiency. Furthermore, provision of clutch unit 11 to switch between SR1 and SR2 ensures, due to slipping of clutch unit 11 during transients of connection, the implementation of a wide range of control strategies in combination with fluid slippage clutch 5. This is because connection of either one of endless flexible drives 9, 10 to fan 8 is possible over a broad range of relative speed between fan 8 and shaft 3. This ensures an advantage over speed shifts comprising e.g. synchronizers because in such a case the switch between one gear ratio to another can be operated only over limited ranges of relative speed.

Speed shift unit 4 is upstream of fluid slippage clutch 5 in order to reduce the impact on existing fan drives where the fluid slippage clutch 5 is attached to fan 8. In order to retrofit an existing fan drive it is only necessary to fit speed shift unit 4 between shaft 3 and input shaft or member 7. In particular, existing fan drives comprise fixed blades 21 surrounding fluid slippage clutch 5 and attached directly to output member 6, which is therefore the hub of fan 8. Furthermore fluid slippage clutch unit 5, being in series to shift unit 4, helps to smooth the noise during shifting of unit 4, in particular when unit 4 modulates along dash-dot line and/or dash-dot-dot line of figure 2.

Provision of neutral ratio SR0 provides an additional flexibility of fan drive 2 that can also implement a power saving strategy for cold start of IC engine 1.

In order to increase efficiency it is preferable that speed shift unit 4 has a minimum torque transfer efficiency greater than that of fluid slippage clutch 5. In particular, speed shift unit 4 may comprise belt drives, either friction or synchronous, or chain drives or gears in order to provide SR1 and SR2.

In order to provide a simple control, either shift unit 4 or slippage clutch 5 or both are configured to be controlled and are indeed controlled according to a pulse width modulation strategy. Actuation of shift 4 or slippage clutch 5 can be either electric, hydraulic, mechanic, magnetic or any combination thereof.

Provision of on-off clutches within clutch unit 11 makes PWM control easier to implement.

Finally it is clear that modifications may be made to the fan drive disclosed and shown herein without departing from the scope of protection defined by the appended claims.

According to an alternative embodiment, fluid slippage clutch 5 comprises a magnetoreological fluid that changes its viscosity depending on a variable magnetic field interacting with the fluid and generated for example by electromagnetic coils. When a magnetoreological fluid is used in a fluid slippage clutch, the functioning and the structure are similar to those of a fluid friction clutch except that a fixed amount of fluid fills the working chamber and the level of slippage is mainly controlled by changing the viscosity of the fluid through a variable magnetic field.

It is possible to provide clutch unit 11 on shaft 3 so that, in neutral speed ratio SR0, also pulleys 13 and 16 are stopped.

According to a further embodiment, fluid slippage clutch 5 can be omitted and, in such a case, fan 8 is rigidly connected to driven shaft 18. Accordingly, the power absorbed by fan 8 is shown by dash-dot and dash-dot-dot lines of figure 2.

According to a non-illustrated embodiment, speed shift 4 may also be configured to provide a third gear ratio. This will further improve efficiency. In case of third gear ratio, a further belt or chain shall be provided in parallel to belts 14 and 17 with respect to shaft 3. A further clutch, in particular an on-off clutch, functionally identical to those of clutch unit 11 shall be provided in order to provide modulation and, if the case, also full disengagement to stop fan 8 when cold starting of IC engine 4.

## Claims

1. A fan drive (2) for a working vehicle comprising a fluid slippage clutch (5), a fan (8) in series to the fluid slippage clutch (5), a speed shift unit (4) connected in series to the fan (8) and the fluid slippage clutch (5) and configured to discretely provide a first non-zero speed ratio (SR1) and at least a second non-zero speed ratio (SR2), the speed shift unit (4) comprising a clutch unit (11) having a first and at least a second clutch configured to alternatively connect the first or the second non-zero speed ratios (SR1, SR2) to the fan (8), **characterized by** comprising a control unit (20) configured to selectively cause a modulation of said clutches for connection of the first and second speed ratios (SR1, SR2) to the fan (8), wherein the control unit (20) is programmed to control fan (8) either by modulation between the first and the second speed ratios (SR1, SR2), the fluid slippage clutch (5) being at maximum engagement; or by controlling the fluid slippage clutch (5), the speed shift unit (4) being set at lowest of the first and second speed ratios (SR1, SR2), depending on the speed range of fan (8).

2. A fan drive according to claim 1, wherein the speed shift unit (4) is configured to further provide a neutral ratio (SR0) such that shift unit (4) is rotationally disconnected from the fluid slippage clutch (5).

3. A fan drive according to claim 2, wherein the control unit (20) is configured to determine whether a target fan speed (TFS) is lower than a predefined threshold (TC) and, in the affirmative, ensure that speed shift unit (4) is in the neutral speed ratio (SR0).

4. A fan drive according to any of the preceding claims, wherein the speed shift unit (4) is upstream the fluid slippage clutch (5) along a torque flow to the fan (8).

5. A fan drive according to any of the preceding claims, wherein the speed shift unit (4) has a minimum torque transfer efficiency higher than that of the fluid slippage clutch (5).

6. A fan drive according to any of the preceding claims, wherein the speed shift unit (4) comprises at least one of an endless flexible drive (9, 10) or a gear drive to define one of the first or second speed ratio (SR1; SR2), a respective one of the clutches of clutch unit (11) being such to selectively connect the endless flexible drive (9, 10) or gear drive to the fan (8).

7. A fan drive according to any of the preceding claims, wherein the fan (8) comprises blades (21) and wherein the blades (21) surround the fluid slippage clutch (5).

8. Retrofit method of a working vehicle having an IC engine (1), a fluid slippage clutch (5) connected to a driving shaft (3) of the IC engine (1) and a fan (8) connected to the fluid slippage clutch (5), comprising the step of fitting a speed shift unit (4) connected in series between the driving shaft (3) and the fluid slippage clutch (5), said speed shift unit (4) being configured to discretely provide a first non-zero speed ratio (SR1) and a second non-zero speed ratio (SR2) and comprising a clutch unit (11) having a first and at least a second clutch configured to alternatively connect the first or the second non-zero speed ratios (SR1, SR2) to the fan (8)), wherein at least one of the clutches of the clutch unit (11) is an on-off clutch and further comprising a control unit (20) configured to selectively cause a modulation of said clutches for connection of the first and second speed ratios (SR1, SR2) to the fan (8), and wherein the control unit (20) is programmed to control fan (8) either by modulation between the first and the second speed ratios (SR1, SR2), the fluid slippage clutch (5) being at maximum engagement; or by controlling the fluid slippage clutch (5), the speed shift unit (4) being set at lowest of the first and second speed ratios (SR1, SR2), depending on the speed range of fan (8).

## Patentansprüche

1. Gebläseantrieb (2) für ein Nutzfahrzeug umfassend eine Fluid-Schlupfkupplung (5), ein Gebläse (8) in Reihe mit der Fluid-Schlupfkupplung (5), eine Geschwindigkeitsschalteinheit (4), die in Reihe mit dem Gebläse (8) und der Fluid-Schlupfkupplung (5) geschaltet ist und dazu eingerichtet ist, getrennt voneinander ein erstes von Null verschiedenes Geschwindigkeitsverhältnis (SR1) und zumindest ein zweites von Null verschiedenes Geschwindigkeitsverhältnis (SR2) bereitzustellen, wobei die Geschwindigkeitsschalteinheit (4) eine Kupplungseinheit (11) umfasst, die eine erste und zumindest eine zweite Kupplung aufweist, die dazu eingerichtet sind, alternativ das erste oder das zweite von Null verschiedene Geschwindigkeitsverhältnis (SR1, SR2) mit dem Gebläse (8) zu koppeln, **dadurch gekennzeichnet, dass** er eine Steuereinheit (20) umfasst, die dazu eingerichtet ist, wahlweise ein Verstellen der Kupplungen zum Verbinden des ersten und des zweiten Geschwindigkeitsverhältnisses (SR1, SR2) mit dem Gebläse (8) vorzunehmen, wobei die Steuereinheit (20) dazu programmiert ist, das Gebläse (8) entweder durch Verstellen zwischen dem ersten und dem zweiten Geschwindigkeitsverhältnis (SR1, SR2) zu steuern, wobei die Fluid-Schlupfkupplung (5) maximal eingreift; oder durch Regeln der Fluid-Schlupfkupplung (5) zu steuern, wobei die Geschwindigkeitsschalteinheit (4) in Abhängigkeit des Geschwindigkeitsbereichs des Gebläses (8) auf das niedrigste aus erstem und zweitem Geschwindigkeitsverhältnis (SR1, SR2) eingestellt ist.

2. Gebläseantrieb nach Anspruch 1, wobei die Geschwindigkeitsschalteinheit (4) dazu eingerichtet ist, weiterhin ein neutrales Verhältnis (SR0) bereitzustellen, sodass die Geschwindigkeitsschalteinheit (4) rotatorisch von der Fluid-Schlupfkupplung (5) getrennt ist.

3. Gebläseantrieb nach Anspruch 2, wobei die Steuereinheit (20) dazu eingerichtet ist, zu bestimmen, ob eine Soll-Gebläsegeschwindigkeit (TFS) niedriger als ein vorbestimmter Grenzwert (TC) ist und bei Bestätigung sicherzustellen, dass sich die Geschwindigkeitsschalteinheit (4) im neutralen Geschwindigkeitsverhältnis (SR0) befindet.

4. Gebläseantrieb nach einem der vorangehenden Ansprüche, wobei die Geschwindigkeitsschalteinheit (4) entlang des Momentflusses des Gebläses (8) stromaufwärts der Fluid-Schlupfkupplung (5) angeordnet ist.

5. Gebläseantrieb nach einem der vorangehenden Ansprüche, wobei die Geschwindigkeitsschalteinheit (4) einen minimalen Drehmomentübertragungswirkungsgrad aufweist, der größer als der der Fluid-Schlupfkupplung (5) ist.

6. Gebläseantrieb nach einem der vorangehenden Ansprüche, wobei die Geschwindigkeitsschalteinheit (4) zumindest einen endlosen elastischen Antrieb (9,10) oder einen Zahnradantrieb umfasst, um eines aus erstem und zweitem Geschwindigkeitsverhältnis (SR1; SR2) zu definieren, wobei eine entsprechende der Kupplungen der Kupplungseinheit (11) derart ausgebildet ist, dass sie wahlweise den endlosen elastischen Antrieb (9, 10) oder den Zahnradantrieb mit dem Gebläse (8) verbindet.

7. Gebläseantrieb nach einem der vorangehenden Ansprüche, wobei das Gebläse (8) Schaufeln (21) umfasst und wobei die Schaufeln (21) die Fluid-Schlupfkupplung (5) umgeben.

8. Nachrüstverfahren eines Nutzfahrzeugs, das einen Verbrennungsmotor (1), eine Fluid-Schlupfkupplung (5), die mit einer Antriebswelle (3) des Verbrennungsmotors (1) verbunden ist, und ein Gebläse (8) aufweist, das mit der Fluid-Schlupfkupplung (5) verbunden ist, umfassend den Schritt des Einbauens einer Geschwindigkeitsschalteinheit (4), die zwischen der Antriebswelle (3) und der Fluid-Schlupfkupplung (5) mit diesen in Reihe geschaltet ist, wobei die Geschwindigkeitsschalteinheit (4) dazu eingerichtet ist, getrennt voneinander ein erstes von Null verschiedenes Geschwindigkeitsverhältnis (SR1) und ein zweites von Null verschiedenes Geschwindigkeitsverhältnis (SR2) bereitzustellen, und eine Kupplungseinheit (11) umfasst, die eine erste und zumindest eine zweite Kupplung aufweist und die dazu eingerichtet ist, das Gebläse (8) alternativ mit dem ersten oder dem zweiten von Null verschiedenen Geschwindigkeitsverhältnissen (SR1, SR2) zu koppeln, wobei zumindest eine der Kupplungen der Kupplungseinheit (11) eine Zwei-Punkt-Kupplung ist, und weiterhin eine Steuereinheit (20) umfasst, die dazu eingerichtet ist, wahlweise eine Verstellung der Kupplungen zum Verbinden des ersten und des zweiten Geschwindingkeitsverhältnisses (SR1, SR2) mit dem Gebläse (8) vorzunehmen, und wobei die Steuereinheit (20) dazu programmiert ist, das Gebläse (8) entweder durch Verstellen zwischen dem ersten und dem zweiten Geschwindigkeitsverhältnis (SR1, SR2) zu steuern, wobei die Fluid-Schlupfkupplung (5) maximal eingreift; oder durch Steuern der Fluid-Schlupfkupplung (5) zu steuern, wobei die Geschwindigkeitsschalteinheit (4) in Abhängigkeit des Geschwindigkeitsbereichs des Gebläses (8) auf das niedrigste aus dem ersten und dem zweiten Geschwindigkeitsverhältnis (SR1, SR2) eingestellt ist.

## Revendications

1. Entraînement de ventilateur (2) pour véhicule utilitaire comprenant un coupleur à glissement (5), un ventilateur (8) en série avec le coupleur à glissement (5), une unité de changement de vitesse (4) connectée en série au ventilateur (8) et au coupleur à glissement (5) et configurée pour fournir discrètement un premier rapport de vitesse non nul (SR1) et au moins un deuxième rapport de vitesse non nul (SR2), l'unité de changement de vitesse (4) comprenant une unité d'accouplement (11) ayant un premier et au moins un deuxième accouplement configuré pour connecter alternativement le premier ou le deuxième rapport de vitesse non nul (SR1, SR2) au ventilateur (8), **caractérisé en ce qu'**elle comprend une unité de contrôle (20) configurée pour entraîner de manière sélective une modulation desdits accouplements pour la connexion des premier et deuxième rapports de vitesse (SR1, SR2) au ventilateur (8), dans lequel l'unité de contrôle (20) est programmée pour contrôler le ventilateur (8) soit par modulation entre le premier et le deuxième rapport de vitesse (SR1, SR2), le coupleur à glissement (5) se trouvant à l'engagement maximum ; soit en contrôlant le coupleur à glissement (5), l'unité de changement de vitesse (4) étant réglée au rapport le plus bas du premier et du deuxième rapport de vitesse (SR1, SR2), en fonction de la plage de vitesse du ventilateur (8).

2. Entraînement de ventilateur selon la revendication 1, dans lequel l'unité de changement de vitesse (4) est configurée pour fournir un rapport neutre (SRO) de sorte que cette unité de changement (4) soit déconnectée de manière rotative du coupleur à glissement (5).

3. Entraînement de ventilateur selon la revendication 2, dans leque l'unité de contrôle (20) est configurée pour déterminer si une vitesse cible du ventilateur (TFS) est inférieure à un seuil prédéfini (TC) et, dans l'affirmative, garantir que l'unité de changement de vitesse (4) est réglée au rapport de vitesse neutre (SRO).

4. Entraînement de ventilateur selon l'une quelconque des revendications précédentes, dans lequel l'unité de changement de vitesse (4) est placée en amont du coupleur à glissement (5) le long d'un flux de couple vers le ventilateur (8).

5. Entraînement de ventilateur selon l'une quelconque des revendications précédentes, dans lequel l'unité de changement de vitesse (4) a une efficacité de transfert de couple minimale supérieure à celle du coupleur à glissement (5).

6. Entraînement de ventilateur selon l'une quelconque des revendications précédentes, dans lequel l'unité de changement de vitesse (4) comprend au moins un entraînement flexible sans fin (9, 10) ou un engrenage d'entraînement pour définir soit le premier soit le deuxième rapport de vitesse (SR1 ; SR2), l'un des coupleurs respectifs de l'unité d'accouplement (11) faisant en sorte de connecter de manière sélective l'entraînement flexible sans fin (9, 10) ou l'engrenage d'entraînement au ventilateur (8).

7. Entraînement de ventilateur selon l'une quelconque des revendications précédentes, dans lequel le ventilateur (8) comprend des lames (21) et où les lames (21) entourent le coupleur à glissement (5).

8. Procédé de modernisation d'un véhicule utilitaire ayant un moteur à combustion interne (1), un coupleur à glissement (5), connecté à un arbre moteur (3) du moteur à combustion interne (1) et un ventilateur (8) connecté au coupleur à glissement (5), comprenant l'étape de placement d'une unité de changement de vitesse (4) connectée en série entre l'arbre moteur (3) et Ile coupleur à glissement (5), ladite unité de changement de vitesse (4) étant configurée pour fournir séparément un premier rapport de vitesse non nul (SR1) et un deuxième rapport de vitesse non nul (SR2) et comprenant une unité d'accouplement (11) ayant un premier et au moins un deuxième coupleur configuré pour connecter alternativement le premier ou le deuxième rapport de vitesse non nul (SR1, SR2) au ventilateur (8), où au moins un des coupleurs de l'unité d'accouplement (11) est un embrayage on-off et comprenant également une unité de contrôle (20) configurée pour entraîner de manière sélective une modulation desdits accouplements pour la connexion des premier et deuxième rapports de vitesse (SR1, SR2) au ventilateur (8) et où l'unité de contrôle (20) est programmée pour contrôler le ventilateur (8) soit par modulation entre le premier et le deuxième rapport de vitesse (SR1, SR2), le coupleur à glissement (5) se trouvant à l'engagement maximum ; ou en contrôlant le coupleur à glissement (5), l'unité de changement de vitesse (4) étant réglée au rapport le plus bas du premier et du deuxième rapport de vitesse (SR1, SR2), en fonction de la plage de vitesse du ventilateur (8).
